# EUROPEAN PATENT APPLICATION

(11) **EP 1 985 900 A2**
(43) Date of publication of application: **29.10.2008**
(21) Application number: 08425273.3
(22) Date of filing: 21.04.2008
(51) Int. Cl.: F16K 31/08, F16K 31/122

(54) **Pneumatic powered coaxial valve with magnetic entrainment**

(30) Priority: 27.04.2007 IT BS20070064
(71) Applicant: Omal S.p.a., 25069 Villa Carcina (BS) (IT)
(72) Inventor: Bravo, Tiziano c/o Omal S.p.A., 25069 Villa Carcine (Brescia) (IT)
(74) Representative: Sangiacomo, Fulvia

(57) **Abstract**

The invention concerns a coaxial valve, particularly for the delivery of chemically aggressive fluids in the pharmaceutical and medical sectors and also for use in the food industry. The opening and closing of the valve is achieved in a combined pneumatic and magnetic actuating system, realised with the help of a pneumatic piston-actuator (13) and an obturator (14) positioned in parallel chambers, separated and constrained one to the other by means of permanent magnets (30,32) for the movements of the obturator in opposite opening and closing directions in response to the movements of the piston-actuator caused by a fluid under pressure.

## Description

### Field of the Invention

This invention concerns the field pf the valves for the control of the delivery of fluids, and concerns in particular a coaxial valve devised especially but not exclusively, to deliver chemically aggressive fluids for the pharmaceutical and medical sector and also for use in the food industry.

### State of the Technique

On the one hand, already well known are the coaxial valves that usually comprise a body with an input and output passage of the fluid on opposite ends and, between said passages, a coaxial chamber in which is housed, as an obturator, an interception piston, with axial bore and moving between a closed and an open position of a valve seat on the side of the input passage of the fluid. Generally, the movements of the piston between one position and another in said coaxial valves, are carried out pneumatically by providing the chamber in which a piloting fluid flows brought in from outside the valve or by a part of the same process fluid, that is by pipe, collected upstream of the valve housing. In said coaxial valves, the pipe fluid is separated from the piloting fluid by lip or toric seals subject however to wear caused by the sliding of the piston.

In other cases, the coaxial valves incorporate, as an obturator element, a membrane, that is however subject to stress caused by the exercise pressure and to breakage due to "fatigue", mainly in its peripheral zone where it fits into the valve body, caused by repeated opening and closing movements of the valve. These pneumatic valves are the normally open type (N.O.), in which the lack of piloting pressure causes the opening of the valve, and thus the rupture of the membrane becomes the cause of pollution of the process fluid with compressed air, where present, or on the contrary the pouring of the process fluid into the pneumatic system.

On the other hand electromagnetic powered coaxial valves are also well known which however, besides requiring a connection and electric feed and to have ferromagnetic internal components with limited chemical inertia characteristics, still have dynamic seals on moving components subject to wear. In addition, the heating of the electromagnets due to the electric current that circulates in them is often considered an adverse condition in that it tends to alter the temperature of the fluid which transits in the valve with related problems of deterioration or difficult management of the process. Objectives of the Invention

The objective of this invention is to resolve the problems and correct the drawbacks of the known technique and to correspondingly propose an axial valve, advantageously without dynamic seals between the zone through which the process fluid transits and the zones provided for the piloting of the valve or simply towards the outside, so as to avoid wear and possible mixtures between process and piloting fluids.

A further objective of the invention is to supply an innovative coaxial valve made out of chemically inert materials, therefore suitable for use also with chemically aggressive fluids, without "dead" points in which the fluids can be held and deteriorate, and which with working temperatures continually higher than 150° becomes easy to sanify.

Said objectives, in addition to the evident advantages stemming from them, are reached with a coaxial valve according to the preamble to claim 1, where the opening and closing of the valve is realised with a combined magnetic and pneumatic command system, with the help of a pneumatic piston-actuator and an obturator positioned in parallel chambers, separate and constrained one to the other by means of permanent magnets for their simultaneous movements.

### Brief Description of the Drawings

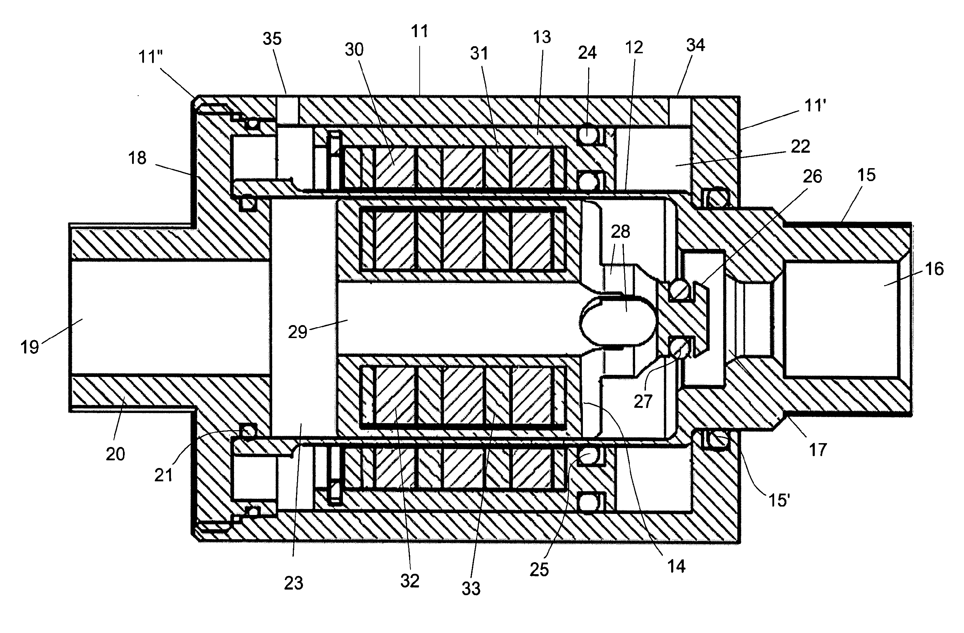

The invention will however be better illustrated in the continuation of this description made in reference to the attached drawing, in which the only figure shows a longitudinal section of the whole of the open coaxial valve.

### Detailed Description of the Invention

The coaxial valve proposed basically comprises an external valve body 11, an internal cylinder 12, a piston-actuator 13 and an obturator 14.

The external valve body 11 has a first end 11' and a second end 11", parallel to each other. The first end of the external body is associated with the interposition of a seal 15', an input connector 15, to which a tube can be connected - not shown-, delivering a process fluid to be distributed and which forms an input passage 16 of the fluid followed by a valve seat 17 facing towards the inside. The second end of the external body is provided with a closing flange 18 forming in turn a output passage 19 in axis with an output connector 20 to which can be connected a tube -not shown-delivering the process fluid towards a user unit. The input and output passages 16, 19 are preferably, but not necessarily, aligned on the axis of the external body 11.

The internal cylinder 12 is placed coaxially in the external body 11. As shown, at one of its ends the internal cylinder 12 can be integrated, that is a single piece, with the input connector 15, whereas its opposite end is associated with the interposition of a static seal 21, to the closure flange 18 of said external body 11.

The external body 11 and the internal cylinder 12 between them form a central chamber 23 in communication with the input and output passages 16, 19 of the process fluid.

The basically annular piston-actuator 13 is mounted in the annular chamber 22 and is provided with seals 24, 25 to seal both the internal surface of the external body 11 and the external surface of the internal cylinder 12.

The obturator 14 is mounted and sliding, without seals, in the internal chamber 23 and is provided to open and close the valve housing 17. It has a head 26 supporting a seal 27 facing towards and interacting with the valve housing in input 17 for the opening and closing of the latter. Furthermore, the obturator present on the back of its head 26, of the radial holes 28 in communication with an axial hole 29, the latter being open towards the output passage 19.

On board the piston-actuator 13 is mounted a series of permanent magnets 30 with axial polarisation direction and oriented with opposed poles, in sequence. Said permanent magnets are alternated with ferromagnetic material rings 31 having the function of conveyors of the magnetic flux. In the same way, on board the obturator is mounted a similar series of permanent magnets 32, with similar positioning and alternated with ferromagnetic material rings 33 overlooking those on board the piston 13 by means of the internal cylinder and so that the magnetic fields of both are in phase.

Both the permanent magnets 30 with relative ferromagnetic material rings 31 relevant to piston-actuator 13, and the others relevant to the obturator 14 can be over-stamped and incorporated in a chemically inert techno polymer to isolate and protect them against contact with the process fluid.

The above described group, the piston-actuator 13 can be a double or single effect type. In the first case, it is movable alternatively by means of a piloting fluid, usually compressed air, fed/discharged by the annular chamber 22 alternatively from opposite parts of the piston-actuator 13, through bores 34, 35 provided in the external body 11, as shown in the drawing, to which the piloting fluid circulation tubes are connected. In the second case -not shown - the piston-actuator can be moved in one direction by a piloting fluid fed in a part of the annular chamber 22 and in the opposite direction by means of a return spring that can be associated with the piston or obturator, and enables the realisation of normally open (N.O) or normally closed (N. C) valves.

However, thanks to connection and magnetic constraint between the piston-actuator and the obturator, the piloted movements of the piston-actuator 13 in the annular chamber 22 cause the simultaneous movements of the obturator 14 in the central chamber 23 for the opening and closing of the valve. Therefore we have a very precise and reliable combined pneumatic and magnetic operation and which, thanks to the fact that the annular chamber 22 and centre chamber 23 are physically separated and are not in communication, a valve can be realised where process and piloting fluids are totally separated, without any seals towards the outside subjected to movements and consequently to wear and without there being any possibility of the process fluid becoming polluted by external agents, or even worse, by leaking out of the valve body.

## Claims

1. A coaxial valve, particularly for the delivery of chemically aggressive fluids in the pharmaceutical and medical sector and also for use in the food industry, comprising an external valve body (11) with an input passage (16) and output passage(19) of the process fluid to be supplied, a valve seat (17) in line with the input (16) of the fluid, an obturator (14) positioned between said input and output passage (16, 19) and moving axially between a closed and an open position of said valve seat (17), and a piston-actuator (13) susceptible to movements piloted by a piloting fluid under pressure, normally compressed air, to provoke the movements of said obturator (14) between said open and closed positions, **characterized in that** the piston-actuator (13) and the obturator (14) are placed individually in the separate concentric chambers, (22, 23), and are constrained one to the other by means of a system of permanent magnets for the movements of said obturator (14) between the open and closed positions in response to the movements of the piston-actuator (13) by the piloting fluid.

2. The coaxial valve according to claim 1, **characterized in that** a cylinder (12) is mounted coaxially in said external valve body (11) and extending from the input passage to the output passage (16, 19) of the process fluid, **in that** said cylinder forms an annular chamber (22) with said external body (11) and a central chamber (23), the latter being in communication only with said input and output passages (16, 19), and **in that** the piston-actuator (13) is housed and moving in said annular chamber (22) and said obturator (14) is housed and moving in said central chamber (23) in line at least with the valve seat (17).

3. Coaxial valve according to claims 1 and 2, **characterized in that** series of permanent magnets (30) are on board the piston-actuator (11) alternated by respective rings made of a ferromagnetic (31) material, and a series of permanent magnets (32) are on board the obturator (14) alternated by respective rings made of a ferromagnetic (33) material, so that permanent magnets and rings on board the piston-actuator are facing each other and interact magnetically, by means of the internal cylinder (12), with magnets on board the obturator for the movements of said obturator in response to the movements of said piston-actuator, the obturator and the piston-actuator being constrained by the magnetic field generated by the permanent magnets system.

4. Coaxial valve according to claim 4, **characterized in that** the permanent magnets (30, 32) both on the piston-actuator (13) and on the obturator (14) are positioned in parallel with the axial polarisation direction of the piston and obturator movements and oriented with opposed poles, in sequence.

5. Coaxial valve according to claims 3 and 4, **characterized in that** the permanent magnets (30) with relative rings made of a ferromagnetic material (31) on the piston-actuator (13) and the permanent magnets (32) with relative rings made of a ferromagnetic material (33) on the obturator (14) can be over-stamped, incorporated and protected in a chemically inert techno-polymer.

6. Coaxial valve according to any one of the previous claims, **characterized in that** the external valve body (11) has a first and a second end in parallel, the first end of the external body being associated with the interposition of a seal (15'), a input connector (15), forming the input passage (16) and the said valve seat (17), and **in that** to the second end of said body a closing flange (18) is fixed forming the output passage (19) on an axis with an output connector (20).

7. Coaxial valve according to claim 6, **characterized in that** the internal chamber (12) on one side is an integral part of the input connector (15) and on the opposite side it is united with the closing flange (18) of the second end of the external body with the interposition of at least one static seal.

8. Coaxial valve according to any one of the previous claims, **characterized in that** the piston-actuator (13) is double-acting, operated by the piloting fluid delivered/discharged alternatively by the annular chamber (22) from opposite parts of said piston-actuator.

9. Coaxial valve according to any of the previous claims from 1 to 7, **characterized in that** the piston-actuator (13) is a single- acting, operated in one direction by the piloting fluid and in the opposite direction by a return spring.
